# EUROPÄISCHE PATENTSCHRIFT

(11) **EP 4 519 714 B1**
(45) Veröffentlichungstag und Bekanntmachung des Hinweises auf die Patenterteilung: **28.10.2026**
(21) Anmeldenummer: 23724651.7
(22) Anmeldetag: 04.05.2023
(51) Int. Cl.: B60W 30/09, B60W 60/00, G05D 1/00, H04W 4/029, G01S 13/931, H04W 4/44, B60W 30/095

(54) **SYSTEM ZUR FAHRWEGÜBERWACHUNG EINES TRANSPORTFAHRZEUGS, TRANSPORTFAHRZEUG, VERFAHREN ZUR FAHRWEGÜBERWACHUNG EINES TRANSPORTFAHRZEUGS SOWIE COMPUTERPROGRAMMPRODUKT**
SYSTEM FOR MONITORING THE ROUTE OF A TRANSPORTATION VEHICLE, TRANSPORTATION VEHICLE, METHOD FOR MONITORING THE ROUTE OF A TRANSPORTATION VEHICLE, AND A COMPUTER PROGRAM PRODUCT
SYSTÈME DE SURVEILLANCE DE L'ITINÉRAIRE D'UN VÉHICULE DE TRANSPORT, VÉHICULE DE TRANSPORT, PROCÉDÉ DE SURVEILLANCE DE L'ITINÉRAIRE D'UN VÉHICULE DE TRANSPORT ET PRODUIT PROGRAMME D'ORDINATEUR

(30) Priorität: 06.05.2022 DE 102022111315
(43) Veröffentlichungstag der Anmeldung: 12.03.2025
(73) Patentinhaber: Dürr Systems AG, Stuttgart, 74321 Bietigheim-Bissingen (DE)
(72) Erfinder: BELL, Stefano, 70806 Kornwestheim (DE); BAYHA, Johannes, 71364 Winnenden (DE); LAUER, Michael, 74321 Bietigheim-Bissingen (DE)
(74) Vertreter: DTS Patent- und Rechtsanwälte PartmbB
(86) Internationale Anmeldenummer: PCT/DE2023/100324
(87) Internationale Veröffentlichungsnummer: WO 2023/213359

(56) Entgegenhaltungen:
- US-A1- 2021 072 041
- US-A1- 2022 051 491

## Beschreibung

Die vorliegende Erfindung geht von so genannten Transportfahrzeugen aus. Ein spezielles Beispiel eines solchen Transportfahrzeugs ist ein so genanntes fahrerloses Transportfahrzeug (FTF). Fahrerlose Transportfahrzeuge sind in der Produktion, wie beispielsweise der Fahrzeugproduktion, allgemein bekannt. Zum Beispiel kann eine Karosserie eines Fahrzeugs auf solch einem fahrerlosen Transportfahrzeug durch eine Werkhalle von einer Arbeitsstation zur anderen transferiert werden. So kann eine klassische Linienproduktion ersetzt werden. Dadurch, dass fahrerlose Transportfahrzeuge in den Werkhallen vorgegebene Wege fahren oder sich aufgrund deren Interaktion mit der Umgebung selbständig fortbewegen, kann eine flexiblere Produktionsumgebung bereitgestellt werden, wo viele unterschiedliche Fahrzeugtypen oder -varianten gleichzeitig produziert werden können.

Üblicherweise weist ein fahrerloses Transportfahrzeug eine Plattform auf, die auf einem Fahrgestell montiert ist und auf der Plattform sind insbesondere Befestigungspunkte für ein Produktionsobjekt (Karosserie bzw. Fahrzeug) vorgesehen. Zur Bewegung in seiner Umgebung weist ein solches bekanntes fahrerloses Transportfahrzeug üblicherweise einen (oder mehrere) Umgebungsscanner auf. Mittels des Umgebungsscanners wird die Umgebung des Transportfahrzeugs abgescannt und es werden dessen Bewegung (vorwärts, rückwärts, Kurvenfahrt) bzw. dessen Geschwindigkeit aufgrund der Realzeitdaten des Umgebungsscanners instantan an die Umgebung angepasst. Bei Umgebungen, in denen eine ganze Reihe von Objekten nah an dem Transportfahrzeug platziert sind, wird so üblicherweise automatisch die Geschwindigkeit dieses Transportfahrzeugs reduziert, damit es besser durch die engen Bereiche der Produktionsanlage manövrieren kann.

In Abhängigkeit der Nähe und Anzahl von Objekten an dem Transportfahrzeug kann auch der Bereich, der von dem Umgebungsscanner gescannt wird, eingestellt werden, insbesondere wird beispielsweise in dem Fall, dass mehrere Objekte sehr dicht an dem Transportfahrzeug platziert sind, der Scanbereich reduziert, so dass nur ein relativ kleiner Bereich vor und/oder neben dem Fahrzeug mit dem Umgebungsscanner abgescannt wird.

Günstig kann es sein, wenn, insbesondere aufgrund dieser Sensorik, die Geschwindigkeit des Transportfahrzeugs aufgrund der Nähe der einzelnen stationären Objekte nur dann reduziert wird, wenn die Reduktion der Geschwindigkeit aus Sicherheitsgründen oder aus prozesstechnischen Gründen nötig ist, wobei im Übrigen vorzugsweise immer eine nicht reduzierte Maximalgeschwindigkeit gewählt wird.

Aus der US 2022/0051491 A1 ist ein Verfahren zur Bereitstellung einer wertbasierten Sensordatenunterdrückung in einer kooperativen Perzeptionsnachrichtenübertragung durch ein Ego-Fahrzeug bekannt.

Aus der US 2021/0072041 A1 ist ein System bekannt, welches einen Standort und eine Ausrichtung eines Fahrzeugs auf einer Karte identifizieren kann, wobei für die Standortbestimmung Daten von einem Fahrzeugsensor und von einem Infrastruktursensor verwendet werden.

Deshalb wird ein System vorgeschlagen, bei dem in der Produktionsumgebung ohnehin bereits vorhandene und/oder genutzte Umgebungsscanner, beispielsweise im Bereich von Robotern, wo Umgebungsscanner sowieso schon aufgestellt sind, verwendet werden.

Diese Umgebungsscanner sind an den stationären Objekten in der Produktionsumgebung angebracht und die Daten eines solchen Umgebungsscanners werden vorzugsweise verwendet, um zumindest die Scanparameter des Umgebungsscanners auf dem Transportfahrzeug zu ändern, um so z.B. dessen Bewegungskontrolle oder Steuerung zu gewährleisten bzw. zu beeinflussen.

So wird ein System zur Fahrwegüberwachung eines Transportfahrzeugs angegeben, wobei das Transportfahrzeug mit einem ersten Umgebungsscanner versehen ist, der einen ersten vorgegebenen Bereich in der Umgebung des Transportfahrzeugs überwacht.

Erfindungsgemäß ist ein zweiter an einem stationären Objekt angebrachter Umgebungsscanner vorgesehen, der einen zweiten vorgegebenen Bereich in der Umgebung des ersten stationären Objekts überwacht.

Das System ist vorzugsweise derart konfiguriert, dass mittels des zweiten Umgebungsscanners festgestellt wird oder feststellbar ist, a) dass oder ob das Transportfahrzeug in den vorgegebenen zweiten Bereich eintritt und b) dass oder ob ein oder mehrere Scanparameter des ersten Umgebungsscanners geändert werden. Der bzw. die Scanpara-
meter können vorzugsweise auch geändert werden, insbesondere automatisch geändert werden, solange mittels des zweiten Umgebungsscanners festgestellt wird, dass sich das Transportfahrzeug in dem zweiten vorgegebenen Bereich befindet.

Somit kann die Veränderung der Scanparameter zum Zeitpunkt des Eintritts in den zweiten vorgegebenen Bereich geschehen und/oder so lange beibehalten werden, wie sich das Transportfahrzeug in dem zweiten vorgegebenen Bereich befindet.

Eine Veränderung der Scanparameter kann insbesondere ein bereichsweises Ausblenden oder Verkleinern des Scanbereichs sein.

Somit werden im weitesten Sinne die Daten des Umgebungsscanners, der an einem ersten stationären Objekt in der Produktionsumgebung montiert ist, vorzugsweise mit herangezogen, um eine Bewegungskontrolle oder Steuerung des Transportfahrzeugs durchzuführen und/oder zu beeinflussen und/oder die Eigenschaften und/oder Betriebsweise des Umgebungsscanners, der an oder auf dem Transportfahrzeug montiert ist, zu verändern.

Es kann vorteilhaft sein, wenn der eine oder die mehreren Scanparameter des ersten Umgebungsscanners derart geändert werden, dass in dem ersten vorgegebenen Bereich ein erster Unterbereich ausgeblendet wird, insbesondere ein solcher Unterbereich, der mit dem zweiten vorgegebenen Bereich überlappt.

Somit wird die Fahrwegüberwachung des Transportfahrzeugs mittels des ersten Umgebungsscanners vorzugsweise lediglich in Bereichen durchgeführt, die außerhalb des zweiten Bereichs, der von dem zweiten Umgebungsscanner abgedeckt wird, liegen, und in dem zweiten Bereich, der von dem zweiten an dem stationären Objekt montierten Umgebungsscanner überwacht wird, wird die Fahrwegüberwachung des Transportfahrzeugs mittels des zweiten Umgebungsscanners durchgeführt.

Gemäß einer vorteilhaften Weiterbildung der Erfindung kann das Transportfahrzeug optional so konfiguriert sein, a) dass seine Fahrzeuggeschwindigkeit und/oder Bewegungsrichtung in Abhängigkeit des Scanergebnisses des ersten Umgebungsscanners angepasst wird, wenn sich das Transportfahrzeug nicht in dem zweiten vorgegebenen Bereich befindet, und b) dass die Fahrzeuggeschwindigkeit und/oder die Bewegungsrichtung des Transportfahrzeugs, wenn dieses in den vorgegebenen zweiten Bereich eintritt oder solange dieses sich in diesem bewegt, in Abhängigkeit des Scan-Ergebnisses des zweiten Umgebungsscanners angepasst wird.

Somit findet in dem zweiten vorgegebenen Bereich im Wesentlichen die Überwachung des Bereichs und die darauf abgestimmte Bewegungskontrolle und Steuerung über den zweiten Umgebungsscanner statt und außerhalb des zweiten vorgegebenen Bereichs findet die Bewegungssteuerung somit aufgrund der Daten des ersten Umgebungsscanners, der unmittelbar auf dem Transportfahrzeug montiert ist, statt.

Auch wenn vorliegend von einem ersten Umgebungsscanner auf dem Transportfahrzeug die Rede ist, können auch ein zweiter, dritter oder mehrere Umgebungsscanner rundherum um das Transportfahrzeug vorgesehen sein, die zusammen einen ersten vorgegebenen Bereich abdecken oder bei denen jeder dieser einzelnen Umgebungsscanner einen einzelnen separaten vorgegebenen Bereich abdeckt. Soweit mehrere Umgebungsscanner an dem Transportfahrzeug vorgesehen sind, können diese vorne, hinten, an den Seiten vorgesehen sein. Die einzelnen Scan-Bereiche der Umgebungsscanner können einander beispielsweise so überlappen, dass der erste vorgegebene Bereich um das Transportfahrzeug vollständig von den Umgebungsscannern abgedeckt wird.

Es können jeweils einer oder mehrere weitere Umgebungsscanner, die jeweils an einem weiteren stationären Objekt angebracht sind, vorgesehen sein.

Somit kann beispielsweise der zweite Umgebungsscanner an einer Säule (z.B. in einer Halle), die als stationäres Objekt dient, angebracht sein, ein weiterer Umgebungsscanner kann beispielsweise an einer Wand oder einer Ecke einer Wand angebracht sein, ein noch weiterer Umgebungsscanner kann an einem Zaun oder einem Maschinenarm, der Teil einer Arbeitsstation ist, angebracht sein. An diesem jeweiligen stationären Objekt können auch mehrere Umgebungsscanner vorgesehen sein, die die komplette Umgebung um dieses stationäre Objekt abscannen und nicht nur einen zu zwei oder mehr Seiten begrenzten Bereich.

Um jedes dieser Objekte wird somit vorzugsweise ein vorgegebener Bereich abgescannt. Die entsprechenden vorgegebenen abgescannten Bereiche eines jeden Objektes können auch überlappen oder können auch nicht überlappend angeordnet sein.

Das System kann optional so konfiguriert sein, dass, wenn mittels des weiteren Umgebungsscanners festgestellt wird, dass das Transportfahrzeug in den jeweiligen weiteren vorgegebenen Bereich eintritt oder solange festgestellt wird, dass sich das Transportfahrzeug in dem jeweiligen weiteren vorgegebenen Bereich befindet, ein oder mehrere Scanparameter des ersten Umgebungsscanners, der bzw. die auf dem Transportfahrzeug vorgesehen ist bzw. sind, geändert wird bzw. werden.

Insbesondere ist beispielsweise eine Kommunikationseinrichtung vorgesehen, die eine Kommunikation zwischen dem Transportfahrzeug und dem zweiten Umgebungsscanner oder weiteren Umgebungsscannern ermöglicht.

Diese Kommunikation kann direkt oder über eine Leitstelle erfolgen. Ein solches Transportfahrzeug wird vorzugsweise von einer Produktionsapplikation (Software) gesteuert. Neben dem autonomen Fahren in der Produktionsumgebung kann vorzugsweise auch über eine Leitstelle eingegriffen werden und die Bewegung/Geschwindigkeit des Transportfahrzeugs kann beispielsweise von einer Person händisch manipuliert werden. Die Kommunikation kann direkt zwischen Transportfahrzeug und zweitem Umgebungsscanner oder über die Leitstelle oder eine Cloud erfolgen.

Vorzugsweise ist eine dreistufige Steuerung derart vorgesehen, dass ein Transportfahrzeug Fahr- und/oder Förderaufträge von einer übergeordneten Transportsteueranlage, beispielsweise einer vollautomatischen Leitstelle, erhält, wobei die Transportsteueranlage wiederum Aufträge von einer übergeordneten Anlagensteuerung erhält. Die Kommunikationseinrichtung ermöglicht insbesondere eine Koordination und/oder Nutzung von Informationen, die von dem Transportfahrzeug und dem zweiten Umgebungsscanner oder weiteren Umgebungsscannern gesammelt und/oder erzeugt werden. Das Transportfahrzeug und der zweite Umgebungsscanner oder die weiteren Umgebungsscanner kommunizieren vorzugsweise direkt mit der Transportsteueranlage, beispielsweise einer vollautomatischen Leitstelle. Hierfür ist insbesondere eine Kommunikation über sein sicheres Protokoll, beispielswiese Profinet/Profisafe, vorgesehen.

Insbesondere kann es vorteilhaft sein, wenn die Fahrzeuggeschwindigkeit in dem zweiten vorgegebenen Bereich oder dem weiteren vorgegebenen Bereich nicht so stark reduziert wird, als es der Fall wäre, wenn die Geschwindigkeitssteuerung insbesondere ausschließlich aufgrund der Daten des ersten Umgebungsscanners erfolgt.

Mittels außerhalb des Transportfahrzeugs stationär festgelegter Umgebungsscanner werden vorzugsweise Daten ermittelt, die zur Steuerung des Transportfahrzeugs herangezogen werden, wobei hierdurch vorzugsweise eine potenzielle Gefahrensituation überprüfbar ist oder hinsichtlich eines Gefährdungsgrads besser einschätzbar ist, als dies durch eine ausschließliche Nutzung des oder der Umgebungsscanner des Transportfahrzeugs der Fall wäre. Mittels außerhalb des Transportfahrzeugs stationär festgelegter Umgebungsscanner kann somit eine Reduktion des Gefährdungsgrads ermittelt werden, insbesondere um eine dem tatsächlichen Gefährdungsgrad angemessene Geschwindigkeit des Transportfahrzeugs zu ergmöglichen.

Wie zuvor beschrieben, ist an Engstellen in der Produktionsumgebung, wo viele solcher stationären Objekte vorgesehen sind, üblicherweise die Bewegungskontrolle und Steuerung des Transportfahrzeugs durch die Daten des ersten Umgebungsscanners derart, dass die Geschwindigkeit auf ein Minimum reduziert wird, um vorsichtig um die entsprechenden stationären Objekte herumzufahren bzw. zu manövrieren. Dies ist durch die Überwachung mit dem zweiten Umgebungsscanner, der an dem stationären Objekt vorgesehen ist, vorzugsweise nicht nötig. Deshalb kann im Vergleich dazu eine höhere Geschwindigkeit gefahren werden.

Gemäß einer vorteilhaften Weiterbildung der Erfindung kann der zweite Umgebungsscanner und/oder auch der weitere Umgebungsscanner Gefahrensituationen detektieren und bei Detektion einer solchen Gefahrensituation eine Reduktion der Geschwindigkeit des Transportfahrzeugs erwirken, insbesondere dieses abbremsen. Die Geschwindigkeitsreduktion kann bis zu einem Wert über 0 km/h erfolgen. Alternativ ist ein kompletter Stillstand erzielbar. Alternativ oder zusätzlich kann bei Detektion einer Gefahrensituation ein Alarm ausgelöst werden.

Insbesondere können das erste stationäre Objekt oder die weiteren stationären Objekte derart vorgesehen sein, dass diese nicht in einem vorgesehenen Fahrweg des Transportfahrzeugs zwischen mehreren Arbeitsstationen in der Produktionsumgebung platziert sind. Insbesondere ist es ein Vorteil, wenn die entsprechenden Umgebungsscanner an Seitenwänden, Säulen oder Abschnitten der Arbeitsstationen angebracht sind, die sowieso schon in der Produktionsumgebung stehen, so dass keine dezidierten Ständer oder sonstige Montagehilfen für solche Umgebungsscanner aufgestellt werden müssen.

Gemäß einem nebengeordneten Aspekt der Erfindung wird auch ein Transportfahrzeug vorgeschlagen, das den ersten Umgebungsscanner aufweist. Das Transportfahrzeug weist zudem eine Schnittstelle auf, die zur direkten oder indirekten Kommunikation mit einem an einem ersten stationären Objekt vorgesehenen zweiten Umgebungsscanner dient.

Somit ist nicht nur das System aus erstem Umgebungsscanner auf dem Transportfahrzeug und zweiten Umgebungsscanner auf dem stationären Objekt unter Schutz gestellt, sondern auch das Transportfahrzeug und seine Schnittstelle als solches.

Gemäß einem weiteren nebengeordneten Aspekt wird auch ein Verfahren zur Fahrwegüberwachung eines Transportfahrzeugs angegeben. Das Verfahren weist vorzugsweise die im Zusammenhang mit dem Transportfahrzeug beschriebenen Merkmale auf.

Die sich auf die Vorrichtung beziehenden Merkmale können vorzugsweise auch zur Weiterbildung des Verfahrens herangezogen werden und umgekehrt.

Darüber hinaus wird ein Computerprogrammprodukt vorgeschlagen, welches computerausführbare Instruktionen zur Durchführung des erfindungsgemäßen Verfahrens aufweist.

Weitere vorteilhafte Ausgestaltungen der Erfindung werden nachfolgend in Verbindung mit den Zeichnungen erläutert. Hierbei zeigen:
- Fig. 1: ein schematisches Ausführungsbeispiel der vorliegenden Erfindung;
- Fig. 2: eine konkrete Situation, in der die vorliegende Erfindung für einen Ein- bzw. Ausfahrbereich eine Arbeitsstation verwendet wird; und
- Fig. 3: eine aus dem Stand der Technik bekannte Konfiguration.

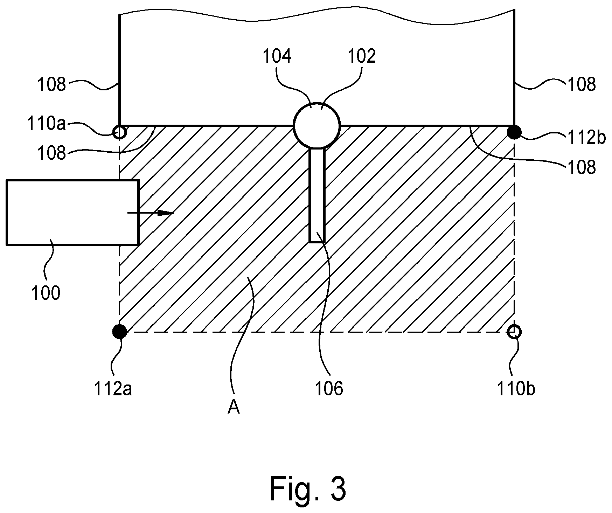

In Fig. 3 ist eine im Stand der Technik bekannte Konfiguration dargestellt, in der ein Transportfahrzeug 100 in einen vorgegebenen Bereich A an einer Roboterstation einfährt. Die Roboterstation weist einen Roboter 102 auf. Hier ist die Basis des Roboters 102 mit Bezugszeichen 104 beschrieben und der Roboterarm mit Bezugszeichen 106. Der Roboterarm 106 des Roboters 102 kann sich in einer in der Figur nicht dargestellten Weise bewegen. Die mit Bezugszeichen 108 dargestellten Elemente sind Zaunelemente, die eine rückwärtige Umgebung des Roboters 102 abgrenzen.

Zur Montage oder Manipulation des Objekts (Karosserie oder sonstiges) wird dieses Objekt auf dem Transportfahrzeug 100 in den vorgegebenen Bereich A eingefahren und in eine vorgegebene Positionsbeziehung zu dem Roboter 102 transferiert. Der vorgegebene Bereich A wird vorliegend von zwei Laserscannern 110a, 110b begrenzt, die mit zwei Reflektoren 112a, 112b in Wechselwirkung stehen.

Auf der in Fig. 3 linken Seite ist ein erster Laserscanner 110a an der Ecke zwischen den zwei Zaunelementen 108 angebracht. Auf der in Fig. 3 rechten Seite ist der zweite Laserscanner 110b gegenüberliegend zu der rechten Ecke der zwei Zaunelemente 108 angebracht. Somit sind die beiden Laserscanner 110a, 110b im Wesentlichen diagonal zueinander bezüglich des Bereichs A angebracht. Entsprechend sind auch die Reflektoren 112a, 112b diagonal angebracht.

Der auf der gegenüberliegenden Seite des Roboters 102 und zum Zaun vorgesehene Reflektor 112a bzw. Laserscanner 110b ist auf einem extra für diesen Zweck angebrachten Ständer angebracht. Die Position der zwei Ständer behindern aber den Fahrweg des Transportfahrzeugs 100, so dass das Transportfahrzeug 100 im Wesentlichen nur, wie in Fig. 3 dargestellt, von links nach rechts oder alternativ von vorne an den Roboter 102 herangefahren werden kann. Wenn eine Person in diesen vorgesehenen Bereich A eintritt oder eine andere Störung in dem Bereich A auftritt, wird dies durch die Laserscanner 110a, 110b in Verbindung mit den Reflektoren 112a, 112b detektiert.

Die Datenverarbeitung der Laserscanner 110a, 110b berücksichtigt aber, dass das Transportfahrzeug 100 nicht als "fremdes Objekt" angesehen wird, und es wird, auch wenn das Transportfahrzeug 100 in den Bereich A einfährt, kein Alarm ausgelöst und der Roboter 102 wird nicht gestoppt. In allen anderen Situationen, wenn ein fremder Gegenstand in dem Bereich A detektiert wird, wird ein Alarm ausgelöst.

Im Stand der Technik ist keine Interaktion der Umgebungsscanner an dem Transportfahrzeug 100, die in vorliegender Fig. 3 nicht dargestellt sind, mit den Laserscannern 110a, 110b vorgesehen.

Zudem sind die Laserscanner bzw. die Reflektoren auch extra an Ständern vorgesehen, die den Fahrweg des Transportfahrzeugs 100 einschränken.

Durch die vorliegende Erfindung ergeben sich hierfür vorzugsweise Optimierungen.

Zum einen werden die entsprechenden Umgebungsscanner vorzugsweise direkt an feststehenden Objekten, wie Säulen oder Wänden, die sowieso schon in der Produktionsumgebung stehen, angebracht. Die Umgebungsscanner überwachen dabei einen vorgegebenen Bereich.

In diesem vorgegebenen Bereich wird die Fahrwegüberwachung des Transportfahrzeugs 100 durch die Informationen dieser Umgebungsscanner bestimmt oder zumindest beeinflusst. In den anderen Bereichen erfolgt die Fahrwegüberwachung des Transportfahrzeugs über den oder die an dem Transportfahrzeug vorgesehenen Umgebungsscanner, insbesondere ausschließlich hierüber.

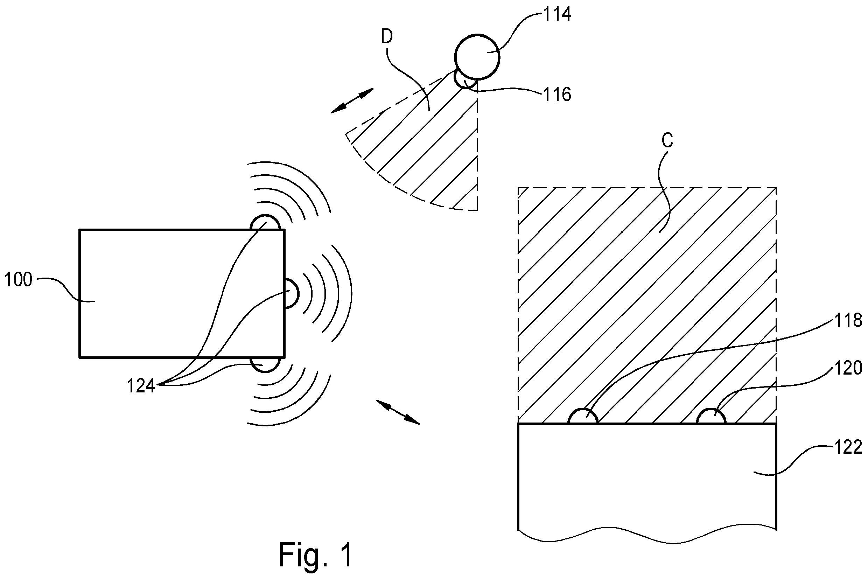

Dieses ist beispielhaft in Fig. 1 zu sehen.

Dort ist ein erstes stationäres Objekt mit Bezugszeichen 114 bezeichnet. Dieses hat einen runden Querschnitt. Dieses kann eine Säule in der Produktionshalle sein. An diesem stationären Objekt 114 ist ein Umgebungsscanner 116 vorgesehen, der im Folgenden als zweiter Umgebungsscanner 116 bezeichnet wird.

In dem Beispiel in Fig. 1 sind des Weiteren zwei weitere Umgebungsscanner mit Bezugszeichen 118 und 120 vorgesehen, die an einem weiteren Objekt 122 montiert sind. Von den beiden weiteren Umgebungsscannern 118, 120 wird ein beispielsweise quadratisch vorgegebener Bereich C überwacht. Von dem Umgebungsscanner 116 an dem ersten stationären Objekt 114 wird beispielsweise ein vorgegebener Bereich D überwacht, welcher beispielsweise kreissektorförmig ist.

Auf der linken Seite in Fig. 1 ist das Transportfahrzeug 100 schematisch als eine längliche viereckige Plattform dargestellt. Darauf oder daran sind beispielsweise drei Umgebungsscanner 124 vorgesehen, welche einzelnen oder im Plural insbesondere als erster bzw. erste Umgebungsscanner bezeichnet werden.

Beispielsweise kann vorgesehen sein, dass einer der drei Umgebungsscanner 124 nach vorne gerichtet ist und die anderen beiden Umgebungsscanner 124 zur Seite. Die Erfindung ist nicht auf diese drei Umgebungsscanner 124 an dem Transportfahrzeug 100 beschränkt, sondern es können auch ein einziger oder zwei oder mehr als drei Umgebungsscanner 124 vorgesehen sein.

Mit jedem Umgebungsscanner 124 werden entsprechende Bereiche abgescannt. Dies ist schematisch durch die Schraffur, die insbesondere ein Sendersignal zeigt, in Figur 1 dargestellt. Die entsprechenden Bereiche der Umgebungsscanner 124, die gescannt werden, können einander überlappen oder auch einzelne separierte Bereiche darstellen.

Ein erster vorgegebener Bereich wird vorzugsweise in der Umgebung des Transportfahrzeugs 100 überwacht. In Abhängigkeit der detektierten Umgebung wird das Transportfahrzeug 100 vorzugsweise in dessen Bewegung kontrolliert bzw. gesteuert.

Insbesondere in sehr engen Situationen, wo mehrere stationäre Objekte nah an das Transportfahrzeug 100 herankommen oder das Transportfahrzeug 100 sich mehreren stationären Objekten nähert, wird beispielsweise die Geschwindigkeit des Transportfahrzeugs 100 reduziert oder auch die Länge des gescannten ersten vorgegebenen Bereichs wird reduziert. Schematisch ist in Fig. 1 mit den Doppelpfeilen zwischen den Umgebungsscannern 124 und den ersten Umgebungsscannern 116 und den weiteren Umgebungsscannern 118, 120 eine Interaktion oder Kommunikation angedeutet.

Sobald das Transportfahrzeug 100 in den vorgegebenen Bereich C und/oder D eintritt, wird die Umgebungsüberwachung von dem zugehörigen Umgebungsscanner 116 bzw. 118, 120 übernommen und/oder ergänzt. Ferner wird beispielsweise die Geschwindigkeit des Transportfahrzeugs 100 angepasst und/oder die Scanparameter der Umgebungsscanner 124 werden angepasst.

Insbesondere wird beispielsweise aus dem ersten vorgegebenen Bereich um das Transportfahrzeug 100 herum derjenige Scanbereich automatisch herausgeschnitten, der schon durch einen der Bereiche C oder D abgedeckt ist.

Sobald ein Abschnitt des Transportfahrzeugs 100 in einen der Bereiche C, D einfährt oder sich ein überlappender Scanbereich ergibt, findet also die Steuerung bzw. Bewegung des Transportfahrzeugs 100 bzw. die Fahrwegüberwachung, die einen Alarm oder einen Stopp des Transportfahrzeugs 100 erfordert, mit Hilfe oder unter Verwendung der Sensordaten der Umgebungsscanner 116, 118 und 120 statt.

In dem Ausführungsbeispiel aus Fig. 1 ist dargestellt, dass einem ersten stationären Objekt 114 ein einziger Umgebungsscanner 116 zugeordnet sein kann oder dass einem stationären Objekt 122 auch mehrere Umgebungsscanner 118, 120 zugeordnet sein können. Jedenfalls wird in Bezug zu diesem stationären Objekt jeweils ein vorgegebener Bereich mit einer vorgegebenen Geometrie überwacht. Wenn das Transportfahrzeug 100 in einen solchen Bereich einfährt, wird zumindest der Scanparameter eines der Umgebungsscanner 124 geändert und die Überwachung des Fahrwegs des Transportfahrzeugs 100 wird anhand der Informationen der Umgebungsscanner 116, 118, 120 an den entsprechenden stationären Objekten 114, 122 gewährleistet.

Auch wenn vorliegend das Transportfahrzeug 100 in einer Umgebung manövriert wird, in der es sehr eng ist und/oder in der mehrere stationäre Objekte vorgesehen sind, wird die Geschwindigkeit vorzugsweise beibehalten oder zumindest weniger stark reduziert als bei Ausführungsformen im Stand der Technik, wo das Transportfahrzeug 100 lediglich durch die Signale der eigenen Umgebungsscanner 124 gesteuert wird.

Sollte eine Person oder ein Objekt in einem der Bereiche C oder D von den Umgebungsscannern 116, 118, 120 an den stationären Objekten 114, 122 detektiert werden, kann das Transportfahrzeug 100 abgebremst oder ganz ausgeschaltet werden oder es kann ein Alarm ausgelöst werden.

Auch wenn vorliegend nur ein einziges Transportfahrzeug 100 beschrieben wurde, können auch mehrere Transportfahrzeuge 100 vorgesehen sein. Jedes dieser Transportfahrzeuge 100 kann vorzugsweise einen oder mehrere entsprechende Umgebungsscanner 124 aufweisen und in ein Gesamtsystem mit den Umgebungsscannern 116, 118, 120 an den stationären Objekten 114, 122 integriert sein.

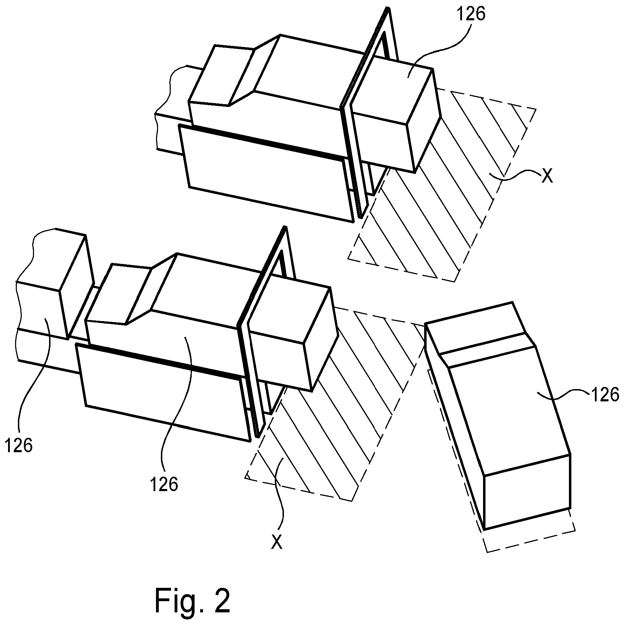

Fig. 2 zeigt ein konkretes Ausführungsbeispiel, in dem Karosserien 126 von Fahrzeugen, insbesondere Kraftfahrzeugen, auf einem solchen Transportfahrzeug 100 (unterhalb der rechts dargestellten Karosserie 126) einer Arbeitsstation zugeführt werden. In den Bereichen X wird die Karosserie 126 von dem Transportfahrzeug 100 an die Arbeitsstation übergeben. Dieser Einfahrbereich ist sehr eng und kann daher insbesondere mit stationären Umgebungsscannern an stationären Objekten überwacht werden, um die Steuerung und/oder Überwachung der Fahrzeuge 100 zu optimieren oder zu ergänzen.

Beispielsweise könnten an den in Fig. 2 dargestellten Säulen Umgebungsscanner vorgesehen sein, um die Bereiche X zu überwachen.

### Bezugszeichenliste

- 100: Transportfahrzeug
- 102: Roboter
- 104: Basis
- 106: Roboterarm
- 108: Zaunelement
- 110a, 110b: Laserscanner
- 112a, 112b: Reflektor
- 114: erstes stationäres Objekt
- 116: zweiter Umgebungsscanner
- 118, 120: weiterer Umgebungsscanner
- 122: weiteres stationäres Objekt
- 124: erster Umgebungsscanner
- 126: Karosserie
- A: vorgegebener Bereich
- C: vorgegebener Bereich
- D: vorgegebener Bereich
- X: Übergabebereich

## Patentansprüche

1. System zur Fahrwegüberwachung eines Transportfahrzeugs (100) mit
- zumindest einem an dem Transportfahrzeug (100) angebrachten ersten Umgebungsscanner (124), der einen ersten vorgegebenen Bereich der Umgebung des Transportfahrzeugs (100) überwacht; und
- zumindest einem an einem stationären Objekt (114) angebrachten zweiten Umgebungsscanner (116), der einen zweiten vorgegebenen Bereich (D) in einer Umgebung des stationären Objekts (114) überwacht,
**dadurch gekennzeichnet, dass**
das System derart konfiguriert ist, dass, wenn mittels des zweiten Umgebungsscanners (116) festgestellt wird, dass das Transportfahrzeug (100) in den zweiten vorgegebenen Bereich (D) eintritt und/oder solange festgestellt wird, dass sich das Transportfahrzeug (100) in dem zweiten vorgegebenen Bereich (D) befindet, ein oder mehrere Scanparameter des ersten Umgebungsscanners (124) geändert werden.

2. System nach Anspruch 1, **dadurch gekennzeichnet, dass** das System derart konfiguriert ist, dass der eine oder die mehreren Scanparameter des ersten Umgebungsscanners (124) derart geändert werden, dass in dem ersten vorgegebenen Bereich ein erster Unterbereich ausgeblendet wird, der mit dem zweiten vorgegebenen Bereich (D) überlappt.

3. System nach Anspruch 1 oder 2, **dadurch gekennzeichnet, dass** das Transportfahrzeug (100) derart konfiguriert ist, dass eine Fahrzeuggeschwindigkeit und/oder Bewegungsrichtung desselben in Abhängigkeit des Scanergebnisses des ersten Umgebungsscanners (124) angepasst wird, wenn sich das Transportfahrzeug (100) nicht in dem zweiten Bereich (D) befindet, und dass die Fahrzeuggeschwindigkeit und/oder die Bewegungsrichtung des Transportfahrzeugs (100), wenn dieses in den zweiten vorgegebenen Bereich (D) eintritt und/oder solange sich das Transportfahrzeug (100) in dem zweiten vorgegebenen Bereich (D) befindet, in Abhängigkeit des Scanergebnisses des zweiten Umgebungsscanners (116) angepasst wird.

4. System nach einem der vorherigen Ansprüche, **dadurch gekennzeichnet, dass** ein an einem weiteren stationären Objekt (122) angebrachter weiterer Umgebungsscanner (118, 120) einen weiteren vorgegebenen Bereich (C) in einer Umgebung des weiteren stationären Objekts (122) überwacht, wobei das System derart konfiguriert ist, dass, wenn mittels des weiteren Umgebungsscanners (118, 120) festgestellt wird, dass das Transportfahrzeug (100) in den weiteren vorgegebenen Bereich (C) eintritt und/oder solange festgestellt wird, dass sich das Transportfahrzeug (100) in dem weiteren vorgegebenen Bereich (C) befindet, ein oder mehrere Scanparameter des ersten Umgebungsscanners (124) geändert werden.

5. System nach einem der vorherigen Ansprüche, **dadurch gekennzeichnet, dass** eine Kommunikationseinrichtung vorgesehen ist, die eine Kommunikation zwischen dem Transportfahrzeug (100) und dem zweiten Umgebungsscanner (116) und/oder dem weiteren Umgebungsscanner (118, 120) ermöglicht.

6. System nach einem der vorherigen Ansprüche, **dadurch gekennzeichnet, dass** das System derart konfiguriert ist, dass die Fahrzeuggeschwindigkeit des Transportfahrzeugs (100) in dem zweiten vorgegebenen Bereich (D) und/oder dem weiteren vorgegebenen Bereich (C) nicht so stark reduziert wird, als es der Fall wäre, wenn die Geschwindigkeitssteuerung des Transportfahrzeugs (100) ausschließlich aufgrund der Daten des ersten Umgebungsscanners (124) erfolgt.

7. System nach einem der vorherigen Ansprüche, **dadurch gekennzeichnet, dass** das System derart konfiguriert ist, dass bei einer von dem zweiten Umgebungsscanner (116) und/oder dem weiteren Umgebungsscanner (118, 120) detektierten Gefahrensituation das Transportfahrzeug (100) abgebremst und/oder ausgeschaltet wird und/oder ein Alarm ausgelöst wird.

8. System nach einem der vorherigen Ansprüche, **dadurch gekennzeichnet, dass** das stationäre Objekt (114) und/oder das weitere stationäre Objekt (122) nicht in einem vorgesehenen Fahrweg des Transportfahrzeugs (100) zwischen mehreren Arbeitsstationen platziert ist/sind und/oder dass das stationäre Objekt (114) und/oder das weitere stationäre Objekt (122) eine Wand, eine Säule, ein Arbeitsstationsabschnitt oder ein anderweitig in der Produktionsanlage bereits vorhandenes Objekt ist/sind.

9. System zur Fahrwegüberwachung eines Transportfahrzeugs (100), umfassend:
- zumindest einen an dem Transportfahrzeug (100) angebrachten ersten Umgebungsscanner (124), der einen ersten vorgegebenen Bereich der Umgebung des Transportfahrzeugs (100) überwacht; und
- zumindest einen an einem stationären Objekt (114) angebrachten zweiten Umgebungsscanner (116), der einen zweiten vorgegebenen Bereich (D) in einer Umgebung des stationären Objekts (114) überwacht,
**dadurch gekennzeichnet, dass**
das System derart konfiguriert ist, dass die Steuerung des Transportfahrzeugs (100) unter Zuhilfenahme von Daten des zweiten Umgebungsscanners (116) erfolgt, wenn das Transportfahrzeug (100) in den zweiten vorgegebenen Bereich eintritt und/oder solange festgestellt wird, dass sich das Transportfahrzeug (100) in dem zweiten vorgegebenen Bereich (D) befindet.

10. Transportfahrzeug (100), umfassend zumindest einen an diesem angebrachten ersten Umgebungsscanner (124), der einen ersten vorgegebenen Bereich der Umgebung des Transportfahrzeugs (100) überwacht, wobei das Transportfahrzeug (100) eine Schnittstelle zur direkten oder indirekten Kommunikation mit einem an einem stationären Objekt (114) angebrachten zweiten Umgebungsscanner (116) aufweist, der einen zweiten vorgegebenen Bereich (D) in einer Umgebung des stationären Objekts (114) überwacht,
**dadurch gekennzeichnet, dass**
das Transportfahrzeug (100) derart konfiguriert ist, dass, wenn mittels des zweiten Umgebungsscanners (116) festgestellt wird, dass das Transportfahrzeug (100) in den zweiten vorgegebenen Bereich (D) eintritt und/oder solange festgestellt wird, dass sich das Transportfahrzeug (100) in den zweiten vorgegebenen Bereich (D) befindet, ein oder mehrere Scanparameter des ersten Umgebungsscanners (124) geändert werden.

11. Verfahren zur Fahrwegüberwachung eines Transportfahrzeugs (100), umfassend:
- zumindest einen an dem Transportfahrzeug (100) angebrachten ersten Umgebungsscanner (124), der einen ersten vorgegebenen Bereich der Umgebung des Transportfahrzeugs (100) überwacht; und
- zumindest einen an einem stationären Objekt (114) angebrachten zweiten Umgebungsscanner (116), der einen zweiten vorgegebenen Bereich (D) in einer Umgebung des stationären Objekts (116) überwacht,
**dadurch gekennzeichnet, dass**
bei dem Verfahren, wenn mittels des zweiten Umgebungsscanners (116) festgestellt wird, dass das Transportfahrzeug (100) in den zweiten vorgegebenen Bereich (116) eintritt und/oder solange festgestellt wird, dass sich das Transportfahrzeug (100) in dem zweiten vorgegebenen Bereich (D) befindet, ein oder mehrere Scanparameter des ersten Umgebungsscanner (124) geändert werden.

12. Computerprogrammprodukt mit computerausführbaren Instruktionen zur Durchführung des Verfahrens nach Anspruch 11.

## Claims

1. System for monitoring the route of a transport vehicle (100), having
- at least one first environment scanner (124) which is mounted on the transport vehicle (100) and monitors a first predefined area of the environment of the transport vehicle (100); and
- at least one second environment scanner (116) which is mounted on a stationary object (114) and monitors a second predefined area (D) in an environment of the stationary object (114),
**characterized in that**
the system is configured such that, when it is determined by means of the second environment scanner (116) that the transport vehicle (100) enters the second predefined area (D) and/or as long as it is determined that the transport vehicle (100) is in the second predefined area (D), one or more scan parameters of the first environment scanner (124) are changed.

2. System according to Claim 1, **characterized in that** the system is configured such that the one or more scan parameters of the first environment scanner (124) are changed in such a way that a first sub-area which overlaps the second predefined area (D) is hidden in the first predefined area.

3. System according to Claim 1 or 2, **characterized in that** the transport vehicle (100) is configured in such a way that a vehicle speed and/or a direction of movement thereof is/are adapted on the basis of the scan result from the first environment scanner (124) if the transport vehicle (100) is not in the second area (D), and **in that** the vehicle speed and/or the direction of movement of the transport vehicle (100) is/are adapted on the basis of the scan result from the second environment scanner (116) if the transport vehicle enters the second predefined area (D) and/or as long as the transport vehicle (100) is in the second predefined area (D).

4. System according to one of the preceding claims, **characterized in that** a further environment scanner (118, 120) mounted on a further stationary object (122) monitors a further predefined area (C) in an environment of the further stationary object (122), wherein the system is configured such that, if it is determined by means of the further environment scanner (118, 120) that the transport vehicle (100) enters the further predefined area (C) and/or as long as it is determined that the transport vehicle (100) is in the further predefined area (C), one or more scan parameters of the first environment scanner (124) are changed.

5. System according to one of the preceding claims, **characterized in that** a communication device is provided and allows communication between the transport vehicle (100) and the second environment scanner (116) and/or the further environment scanner (118, 120).

6. System according to one of the preceding claims, **characterized in that** the system is configured such that the vehicle speed of the transport vehicle (100) in the second predefined area (D) and/or the further predefined area (C) is not reduced as much as it would if the speed control of the transport vehicle (100) were carried out solely based on the data from the first environment scanner (124).

7. System according to one of the preceding claims, **characterized in that** the system is configured such that, if a dangerous situation is detected by the second environment scanner (116) and/or the further environment scanner (118, 120), the transport vehicle (100) is decelerated and/or switched off and/or an alarm is triggered.

8. System according to one of the preceding claims, **characterized in that** the stationary object (114) and/or the further stationary object (122) is/are not placed in an intended route of the transport vehicle (100) between a plurality of workstations, and/or **in that** the stationary object (114) and/or the further stationary object (122) is/are a wall, a column, a workstation section or other object already present in the production plant.

9. System for monitoring the route of a transport vehicle (100), comprising:
- at least one first environment scanner (124) which is mounted on the transport vehicle (100) and monitors a first predefined area of the environment of the transport vehicle (100); and
- at least one second environment scanner (116) which is mounted on a stationary object (114) and monitors a second predefined area (D) in an environment of the stationary object (114),
**characterized in that**
the system is configured such that the transport vehicle (100) is controlled with the aid of data from the second environment scanner (116) if the transport vehicle (100) enters the second predefined area and/or as long as it is determined that the transport vehicle (100) is in the second predefined area (D).

10. Transport vehicle (100) comprising at least one first environment scanner (124) which is mounted on it and monitors a first predefined area of the environment of the transport vehicle (100), wherein the transport vehicle (100) has an interface for direct or indirect communication with a second environment scanner (116) which is mounted on a stationary object (114) and monitors a second predefined area (D) in an environment of the stationary object (114), **characterized in that**
the transport vehicle (100) is configured such that, when it is determined by means of the second environment scanner (116) that the transport vehicle (100) enters the second predefined area (D) and/or as long as it is determined that the transport vehicle (100) is in the second predefined area (D), one or more scan parameters of the first environment scanner (124) are changed.

11. Method for monitoring the route of a transport vehicle (100), comprising:
- at least one first environment scanner (124) which is mounted on the transport vehicle (100) and monitors a first predefined area of the environment of the transport vehicle (100); and
- at least one second environment scanner (116) which is mounted on a stationary object (114) and monitors a second predefined area (D) in an environment of the stationary object (116),
**characterized in that**
in the method, when it is determined by means of the second environment scanner (116) that the transport vehicle (100) enters the second predefined area (116) and/or as long as it is determined that the transport vehicle (100) is in the second predefined area (D), one or more scan parameters of the first environment scanner (124) are changed.

12. Computer program product with computer-executable instructions for carrying out the method according to Claim 11.

## Revendications

1. Système de surveillance de l'itinéraire d'un véhicule de transport (100) avec
- au moins un premier scanner d'environnement (124), installé sur le véhicule de transport (100), qui surveille une première zone prédéfinie de l'environnement du véhicule de transport (100); et
- au moins un deuxième scanner d'environnement (116) installé sur un objet fixe (114), qui surveille une deuxième zone prédéfinie (D) dans un environnement de l'objet fixe (114),
**caractérisé en ce que**
le système est configuré de telle manière que, lorsque le deuxième scanner d'environnement (116) permet de constater que le véhicule de transport (100) entre dans la deuxième zone prédéfinie (D) et/ou tant qu'il est constaté que le véhicule de transport (100) se trouve dans la deuxième zone prédéfinie (D), un ou plusieurs paramètres de balayage du premier scanner environnant (124) sont modifiés.

2. Système selon la revendication 1, **caractérisé en ce que** le système est configuré de telle manière que le un ou les plusieurs paramètres de balayage du premier scanner d'environnement (124) sont modifiés de telle manière qu'une première zone partielle qui chevauche la deuxième zone prédéfinie (D) est masquée dans la première zone prédéfinie.

3. Système selon la revendication 1 ou 2, **caractérisé en ce que** le véhicule de transport (100) est configuré de telle manière qu'une vitesse de véhicule et/ou une direction de déplacement de celui-ci sont adaptées en fonction du résultat de balayage du premier scanner d'environnement (124) lorsque le véhicule de transport (100) ne se trouve pas dans la deuxième zone (D), et que la vitesse de véhicule et/ou la direction de déplacement du véhicule de transport (100), lorsque celui-ci entre dans la deuxième zone prédéfinie (D) et/ou tant que le véhicule de transport (100) se trouve dans la deuxième zone prédéfinie (D), sont adaptées en fonction du résultat de balayage du deuxième scanner d'environnement (116).

4. Système selon l'une des revendications précédentes, **caractérisé en ce qu'**un autre scanner d'environnement (118, 120) installé sur un autre objet fixe (122) surveille une autre zone prédéfinie (C) dans un environnement de l'autre objet fixe (122), le système étant configuré de telle manière que, lorsque l'autre scanner d'environnement (118, 120) permet de constater que le véhicule de transport (100) entre dans l'autre zone prédéfinie (C) et/ou tant qu'il est constaté que le véhicule de transport (100) se trouve dans l'autre zone prédéfinie (C), un ou plusieurs paramètres de balayage du premier scanner d'environnement (124) sont modifiés.

5. Système selon l'une des revendications précédentes, **caractérisé en ce qu'**est prévu un dispositif de communication qui permet une communication entre le véhicule de transport (100) et le deuxième scanner d'environnement (116) et/ou l'autre scanner d'environnement (118, 120).

6. Système selon l'une des revendications précédentes, **caractérisé en ce que** le système est configuré de telle manière que la vitesse de véhicule de transport (100) dans la deuxième plage prédéfinie (D) et/ou dans l'autre zone prédéfinie (C) n'est pas réduite si drastiquement que dans le cas où la commande de vitesse du véhicule de transport (100) est effectuée exclusivement sur la base des données du premier scanner d'environnement (124).

7. Système selon l'une des revendications précédentes, **caractérisé en ce que** le système est configuré de telle manière que dans le cas d'une situation dangereuse détectée par le deuxième scanner d'environnement (116) et/ou l'autre scanner d'environnement (118, 120), le véhicule de transport (100) est freiné et/ou arrêté et/ou une alarme est déclenchée.

8. Système selon l'une des revendications précédentes, **caractérisé en ce que** l'objet fixe (114) et/ou l'autre objet fixe (122) n'est pas placé/ne sont pas placés sur un itinéraire prévu du véhicule de transport (100) entre plusieurs postes de travail et/ou que l'objet fixe (114) et/ou l'autre objet fixe (122) est/sont une paroi, une colonne, une section de poste de travail ou un tout autre objet déjà présent dans l'installation de production.

9. Système de surveillance de l'itinéraire d'un véhicule de transport (100), comprenant:
- au moins un premier scanner d'environnement (124), installé sur le véhicule de transport (100), qui surveille une première zone prédéfinie de l'environnement du véhicule de transport (100); et
- au moins un deuxième scanner d'environnement (116) installé sur un objet fixe (114), qui surveille une deuxième zone prédéfinie (D) dans un environnement de l'objet fixe (114),
**caractérisé en ce que**
le système est configuré de telle manière que le véhicule de transport (100) est commandé à l'aide de données du deuxième scanner d'environnement (116) lorsque le véhicule de transport (100) entre dans la deuxième zone prédéfinie et/ou tant qu'il est constaté que le véhicule de transport (100) se trouve dans la deuxième zone prédéfinie (D).

10. Véhicule de transport (100) comprenant au moins un premier scanner d'environnement (124) installé sur celui-ci, qui surveille une première zone prédéfinie de l'environnement du véhicule de transport (100), le véhicule de transport (100) comportant une interface pour une communication directe ou indirecte avec un deuxième scanner d'environnement (116) installé sur un objet fixe (114), qui surveille une deuxième zone prédéfinie (D) dans un environnement de l'objet fixe (114),
**caractérisé en ce que**
le véhicule de transport (100) est configuré de telle manière que, lorsque le deuxième scanner d'environnement (116) permet de constater que le véhicule de transport (100) entre dans la deuxième zone prédéfinie (D) et/ou tant qu'il est constaté que le véhicule de transport (100) se trouve dans la deuxième zone prédéfinie (D), un ou plusieurs paramètres de balayage du premier scanner d'environnement (124) sont modifiés.

11. Procédé de surveillance de l'itinéraire d'un véhicule de transport (100), comprenant:
- au moins un premier scanner d'environnement (124), installé sur le véhicule de transport (100), qui surveille une première zone prédéfinie de l'environnement du véhicule de transport (100); et
- au moins un deuxième scanner d'environnement (116) installé sur un objet fixe (114), qui surveille une deuxième zone prédéfinie (D) dans un environnement de l'objet fixe (116),
**caractérisé en ce que**
dans le procédé, lorsque le deuxième scanner d'environnement (116) permet de constater que le véhicule de transport (100) entre dans la deuxième zone prédéfinie (116) et/ou tant qu'il est constaté que le véhicule de transport (100) se trouve dans la deuxième zone prédéfinie (D), un ou plusieurs paramètres de balayage du premier scanner d'environnement (124) sont modifiés.

12. Produit-programme d'ordinateur avec des instructions exécutables par ordinateur pour mettre en œuvre le procédé selon la revendication 11.
